(19)

Europäisches
Patentamt
European
Patent Office
Office européen
des brevets

(11) **EP 4 195 121 A1**

(12) **EUROPEAN PATENT APPLICATION**

(43) Date of publication:
**14.06.2023 Bulletin 2023/24**

(21) Application number: **22204924.9**

(22) Date of filing: **01.11.2022**

(51) International Patent Classification (IPC):
**G06Q 10/063** (2023.01)    **G06F 18/214** (2023.01)
**G06N 3/006** (2023.01)

(52) Cooperative Patent Classification (CPC):
**G06V 10/7784; G06F 18/2148; G06F 18/2178;
G06N 3/006; G06N 7/01; G06N 20/00;
G06Q 10/063; G06V 10/7747; G06V 10/82;**
G06N 3/044; G06N 3/045; G06N 3/08; G06N 5/043

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.12.2021 US 202117544718**

(71) Applicant: **INTEL Corporation
Santa Clara, CA 95054 (US)**

(72) Inventors:
• **Vijay, Varun Kumar
San Francisco, 94103 (US)**
• **Sheikh, Hassam Ullah
Orlando, 32826 (US)**
• **Majumdar, Somdeb
Mission Viejo, 92692 (US)**
• **Phielipp, Mariano J.
Mesa, 85202 (US)**

(74) Representative: **Goddar, Heinz J.
Boehmert & Boehmert
Anwaltspartnerschaft mbB
Pettenkoferstrasse 22
80336 München (DE)**

(54) **SYSTEM AND METHOD FOR CONTROLLING INTER-AGENT COMMUNICATION IN MULTI-AGENT SYSTEMS**

(57)    An agent in a multi-agent system is provided with a policy model that controls communication of the agent with other agents in the multi-agent system. The policy model is trained by using MARL. The policy model receives more messages from one or more other agents in the multi-agent system. The policy model generates a reward score based at least on a hidden state of the agent and the one or more messages. The reward score represents an aggregation of a value of sending the message for a task and a cost of sending the message. The policy model determines whether to send the message based on the reward score. After determining to send the message, the policy model generates the message based on the hidden state of the agent and the one or more messages and sends the message to one or more other agents in the multi-agent system.

**EP 4 195 121 A1**

**Description**

Technical Field

This disclosure relates generally to multi-agent systems, and more specifically, to controlling inter-agent communication in multi-agent systems.

Background

A multi-agent system is a group of agents cohabitating in a common environment. An agent is an autonomous object capable of perceiving the common environment with sensors and acting upon the common environment through actuators. The agents of a multi-agent system often collaborate toward a shared goal, such as completing a particular task. Multi-agent systems are applied in a variety of domains including robotic teams, distributed control, resource management, collaborative decision support systems, data mining, and so on. Applications, such as exploration of remote areas and factory floor operations, can be automated by deploying a group of cooperative agents. In order to share information and agree on joint strategies, the agents need to communicate with each other. However, communications typically happen under constraints in resources, such as bandwidth, power capacity, and so on. Thus, it is important for agents to learn whether and when to communicate to which other agents to solve the shared goal.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates a multi-agent reinforcement learning (MARL) environment, in accordance with various embodiments.
FIG. 2 is a block diagram of a multi-agent server, in accordance with various embodiments.
FIG. 3 is a block diagram of an agent, in accordance with various embodiments.
FIG. 4 is a block diagram of a policy model, in accordance with various embodiments.
FIG. 5 illustrates communication gates of agents, in accordance with various embodiments.
FIG. 6 illustrates a policy model for an agent in a multi-agent system, in accordance with various embodiments.
FIG. 7 is a flowchart showing a method of controlling communication of an agent in a multi-agent system, in accordance with various embodiments.
FIG. 8 is a block diagram of an example computing device, in accordance with various embodiments.

Detailed Description

*Overview*

MARL studies how agents of a multi-agent system perform (e.g., communicate, collaborate, compete, or learn) in a common environment to accomplish a task. MARL usually defines policies and rewards for agents in a multi-agent system. A policy defines the way the agent behaves in a given time. A policy can be a mapping from the hidden states of the environment to the actions the agent takes in the environment. The policy can be a simple function or lookup table in the simplest cases, or it may involve complex function computations. The policy is the core of what the agent learns. Reinforcement learning is learning policies of the agents.

A reward defines the goal of a reinforcement learning problem. On each time-step, the action of the agent (e.g., communication with other agents) results on a reward. The agent's final goal is to maximize the total reward it receives. The reward can distinguish between the good and bad action results for the agent. The reward may be the primary way for impacting the policy. For instance, if an action selected by the policy results in a low reward, the policy can be changed to select some other action for the agent in the same situation. The reward signal may indicate good actions of the agent in an immediate sense. For instance, each action of the agent results immediately on a reward.

MARL has been shown to produce complex emergent behavior, including the use of tools in order to accomplish tasks. In many domains, it is possible for agents to communicate with each other over a network. By doing so, agents can discover performant joint strategies for completing a shared task. Inter-agent communication can improve performance in multi-agent coordination tasks. Policy models usually support unconstrained inter-agent communication, where an agent communicates with all other agents at every step, even when the task does not require it. These policy models require the agents to have resources (e.g., bandwidth, power capacity, etc.) to support the unconstrained inter-agent communication, which can be costly. Also, available resources for communication in many applications (such as Internet of Things, robotics applications, etc.) are limited and cannot facilitate the unconstrained inter-agent communication. These policy models fail to work in such applications. Thus, improved policy models are needed for efficient inter-agent communication in multi-agent systems.

Embodiments of the present invention relate to a MARL system capable of producing a group of collaborative agents with efficient inter-agent communication. The MARL system trains the agents in a multi-agent system by using MARL. An agent (or a communication gate in the agent) is trained to control when and with whom to communicate based on reward signals that aggregates both task reward (i.e., value of the agent's communication to the task of the multi-agent system) and communication penalty (i.e., cost of the agent's communication to the multi-agent system). With such aggregated reward signals, the agent can minimize its communication and at the same time, maximize its contribution to the task of the multi-agent system.

An example of the MARL system trains a policy model for each agent in the multi-agent system. The policy model facilitates optimized communications by the agent. In some embodiments, the policy model receives messages from one or more other agents in the multi-agent system and generates an aggregated communication vector by combining the messages. The policy model further produces a first state vector of the agent based at least on a second state vector of the agent and the aggregated communication vector. A state vector is a vector representing a hidden state of the agent at a particular time. The first state vector represents a hidden state of the agent at a later time than the time of the hidden state of the agent represented by the second state vector. The policy model also determines whether the agent will send a message by determining a reward score based at least on the first state vector of the agent. The reward score represents an aggregation of a value of sending the message for carrying out the task and a cost of the agent sending the message. In some embodiments, the reward score is a weight sum of a task score and a communication score. The task score indicates a value of sending the message for carrying out the task. The communication score indicates the cost of the agent sending the message. The cost may include cost to the agent, cost to the agent(s) receiving the message, other costs to the multi-agent system, or some combination thereof. The communication score may be determined based at least on communication resources available in the agent.

The policy model may optimize the reward score to determine whether and to whom to send the message. In some embodiments, the policy model may compare the reward score with another reward score that represents an aggregation of a contribution of not sending the message to the task and a cost of not sending the message and determine whether the agent will send the message based on the comparison. After it is determined that the agent will send the message, the policy model generates the message and sends the message to one or more other agents. In some embodiments, the policy model uses the reward score to determine whether the agent will send the message to multiple other agents, such as all the other agents in the multi-agent system. In other embodiments, the policy model uses the reward score to determine whether the agent will send the message to a particular agent. The policy model may determine the reward score based on both the first state vector of the agent and a state vector of the particular agent.

By using the reward score that aggregates both the value of the agent's communication for carrying out the task and the cost of the communication, the policy model can prevent inter-agent communication when the cost outweighs the contribution. The policy model can facilitate efficient inter-communication of the multi-agent system in applications where communication resources are limited.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed, or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the context of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the context of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or system. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description below and the accompanying drawings.

*Example MARL Environment*

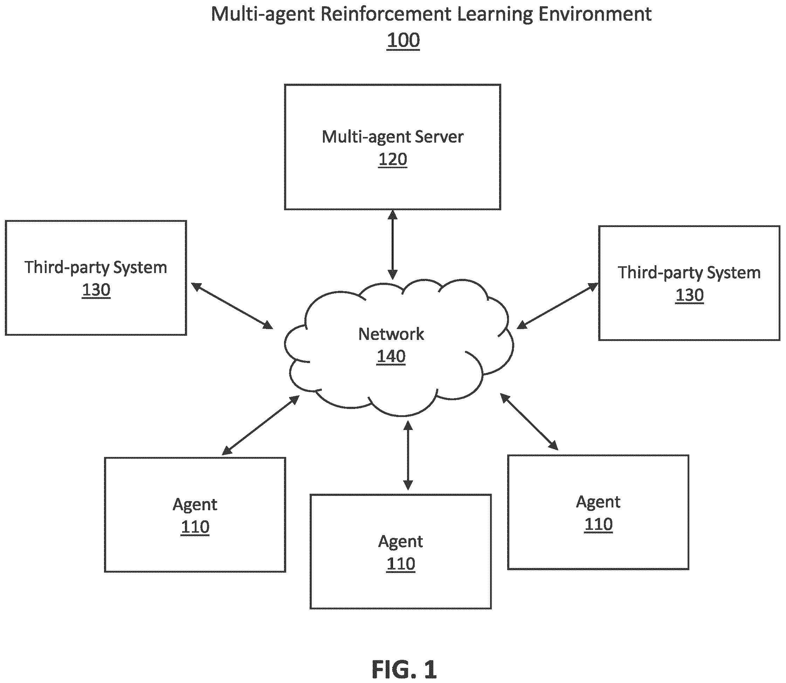

FIG. 1 illustrates a MARL environment 100, in accordance with various embodiments. The MARL environment 100 includes agents 110, a multi-agent server 120, and third-party systems 130, and a network 140. For purpose of simplicity and illustration, FIG. 1 shows three agents 110 and two third-party systems 130. In other embodiments, the MARL environment 100 may include fewer, more, or different components. For instance, the MARL environment 100 may include a different number of agents. A single agent is referred to herein as agent 110, and multiple agents are referred to collectively as agents 110. A single third-party system is referred to herein as third-party system 130, and multiple third-party systems are referred to collectively as third-party systems 130.

The agents 110 are in a multi-agent system to carry out a shared task for accomplishing a shared goal. The agents 110 cohabitate in a scene of the multi-agent system. Even though FIG. 1 shows three agents 110, the multi-agent system may include more or fewer agents 110. An agent 110 is a device capable of perceiving the scene and taking actions in the scene with the purpose of accomplishing the goal of the multi-agent system. In some embodiments, the agent 110 perceives the scene by using one or more sensors. The sensors detect an environment surrounding the agent 110, such as the scene of the multi-agent system or part of the scene. The sensors may be components of the agent 110 or otherwise associated with the agent 110.

An agent 110 is intelligent because it can be trained, e.g., through MARL. In various embodiments, the agent 110 is trained to take actions that can maximize one or more reward signals. For instance, the agent 110 includes a policy model that controls operations and functionality of the agent 110. The policy model may be a computing system, e.g., a neural network, that has been trained to control the operations and functionality of the agent 110 based on reward signals. In various embodiments, the policy model determines actions that the agent 110 will take to maximize a reward signal. In an example, the policy model determines whether the agent 110 communicates with other agents 110 in the multi-agent system based on a reward signal that incorporates both a contribution of the communication to the task and a cost of the communication. The cost of the communication may include, for example, consumption of communication resources (e.g., bandwidth, power, etc.) of the agent 110, consumption of communication resources of another agent 110 that receives the communication, latency in other actions taken by the agent 110 caused by the communication, and so on. With such a policy model, the agent 110 is able to maximize its contribution to the task while minimize communications with other agents 110.

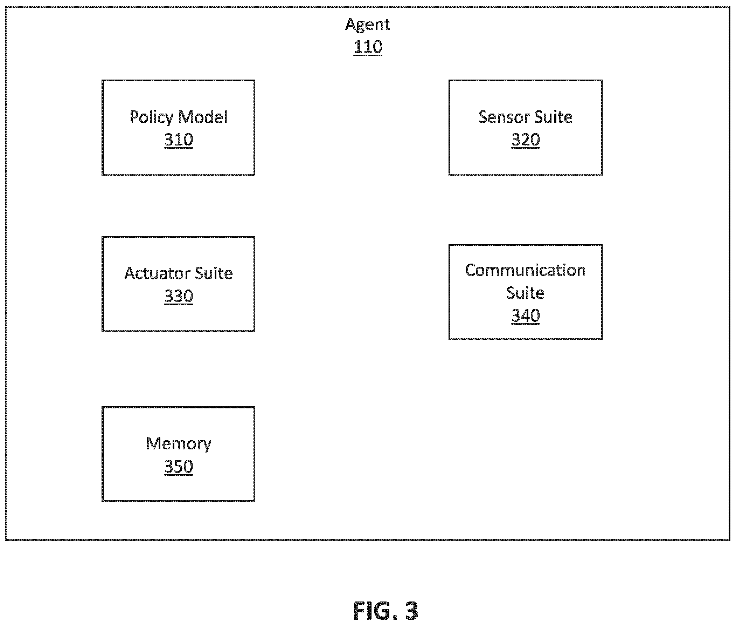

In some embodiments, an agent 110 may also be autonomous. For instance, the agent 110 includes actuators, with which the agent 110 can navigate in the scene or move components in the agent 110. More details regarding the agents 110 are described below in conjunction with FIG. 3.

The multi-agent server 120 facilitates the agents 110 to accomplish the goal of the multi-agent system. For instance, the multi-agent server 120 trains policy models by using MARL and distributes the policy models to agents 110. In some embodiments, the multi-agent server 120 may train a different policy model for a different agent 110. The multi-agent server 120 may continuously train the policy models based on new training data, e.g., data received from the agents 110. The multi-agent server 120 may periodically release a new policy model to an agent 110 to replace an existing policy model in the agent.

In some embodiments, the multi-agent server 120 determines the goal of the multi-agent system. For instance, the multi-agent server 120 may receive a request for a service from a third-party system 130. The multi-agent server 120 generates the goal based on the request. The multi-agent server 120 may also select the scene of the multi-agent system based on the request.

The multi-agent server 120 may instruct the agents 110 to autonomously navigate to particular locations in the scene to carry out the task. In some embodiments, the multi-agent server 120 may also provide the agents 110 with system backend functions.

The multi-agent server 120 may include one or more switches, servers, databases, live advisors, or an automated voice response system (VRS). The multi-agent server 120 may include any or all of the aforementioned components, which may be coupled to one another via a wired or wireless local area network (LAN). The multi-agent server 120 may receive and transmit data via one or more appropriate devices and network from and to the agent 110, such as by wireless systems, such as 882.11x, General Packet Radio Service (GPRS), and the like. A database at the multi-agent server 120 can store information of the agents 110, such as agent identification information, profile records, behavioral patterns, and so on. The multi-agent server 120 may also include a database of roads, routes, locations, etc. permitted for use by the agents 110. The multi-agent server 120 may communicate with an agent 110 to provide route guidance in response to a request received from the agent 110.

The third-party systems 130 communicate with the multi-agent server 120 through the network 140. For instance, a third-party system 130 sends a service request to the multi-agent server 120. The service request may specify a goal or task to be done by the multi-agent system. The third-party systems 130 may also provide feedback of the service provided by the multi-agent system to the multi-agent server 120. The third-party systems 130 may also communicate with some or all of the agents 110. For instance, a third-party system 130 provides an instruction to a particular agent 110 for the agent 110 to carry out a service. The third-party systems 130 may also provide information needed by the agents 110 to carry out services. For instance, a third-party system 130 provides information of the scene (e.g., location, map, etc.) to the multi-agent server 120 or the agents 110.

A third-party system 130 may be one or more computing devices capable of receiving user input as well as transmitting and/or receiving data via the network 140. In one embodiment, a third-party system 130 is a conventional computer system, such as a desktop or a laptop computer. Alternatively, a third-party system 130 may be a device having computer functionality, such as a personal digital assistant (PDA), a mobile telephone, a smartphone, an autonomous vehicle, or another suitable device. A third-party system 130 is configured to communicate via the network 140. In one embodiment, a third-party system 130 executes an application allowing a user of the third-party system 130 to interact with the multi-agent server 120 (e.g., the distributer 240 of the multi-agent server 120). A third-party system 130 executes a browser application to enable interaction between the third-party system 130 and the multi-agent server 120 via the network 140. In another embodiment, a third-party system 130 interacts with the multi-agent server 120 through an application programming interface (API) running on a native operating system of the third-party system 130, such as IOS® or ANDROID™.

In an embodiment, a third-party system 130 is an integrated computing device that operates as a standalone network-enabled device. For example, the third-party system 130 includes display, speakers, microphone, camera, and input device. In another embodiment, a third-party system 130 is a computing device for coupling to an external media device such as a television or other external display and/or audio output system. In this embodiment, the third-party system 130 may couple to the external media device via a wireless interface or wired interface (e.g., an HDMI cable) and may utilize various functions of the external media device such as its display, speakers, microphone, camera, and input devices. Here, the third-party system 130 may be configured to be compatible with a generic external media device that does not have specialized software, firmware, or hardware specifically for interacting with the third-party system 130.

The network 140 supports communications in the MARL environment 100. The network 140 may comprise any combination of local area and/or wide area networks, using both wired and/or wireless communication systems. In one embodiment, the network 140 may use standard communications technologies and/or protocols. For example, the network 140 may include communication links using technologies such as Ethernet, 802.11, worldwide interoperability for microwave access (WiMAX), 3G, 4G, code division multiple access (CDMA), digital subscriber line (DSL), etc. Examples of networking protocols used for communicating via the network 140 may include multiprotocol label switching (MPLS), transmission control protocol/Internet protocol (TCP/IP), hypertext transport protocol (HTTP), simple mail transfer protocol (SMTP), and file transfer protocol (FTP). Data exchanged over the network 140 may be represented using any suitable format, such as hypertext markup language (HTML) or extensible markup language (XML). In some embodiments, all or some of the communication links of the network 140 may be encrypted using any suitable technique or techniques.

*Example Multi-agent Server*

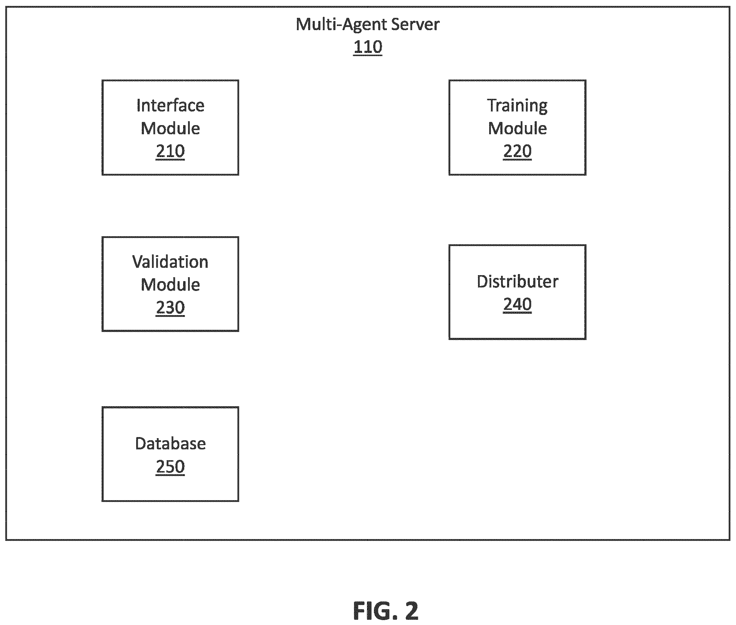

FIG. 2 a block diagram of the multi-agent server 120, in accordance with various embodiments. The multi-agent server 120 includes an interface 210, a training module 220, a validation module 230, a distributer 240, and a database 250. In other embodiments, the multi-agent server 120 may include fewer, more, or different components. Further, functionality attributed to a component of the multi-agent server 120 may be accomplished by a different component included in the multi-agent server 120 or a different system.

The interface module 210 facilitates communications of the multi-agent server 120 with other systems. For example, the interface module 210 establishes communications between the multi-agent server 120 with an external database to receive data that can be used to train policy models. The interface module 210 can also establish communications between the multi-agent server 120 with an agent 110 or third-party system 130. As another example, the interface module 210 supports the multi-agent server 120 to distribute policy models to agents 110.

The training module 220 trains policy models of the agents 110. The training module 220 may train a policy model by using a training dataset. The training module 220 forms the training dataset. The training module 220 inputs the training objects into the policy model and adjusts the internal parameters of the policy model based on the training labels. The training module 220 may extract feature values from the training dataset, the features being variables deemed potentially relevant to maximizing rewards signals. In one embodiment, the training module 220 may apply dimensionality reduction (e.g., via linear discriminant analysis (LDA), principle component analysis (PCA), or the like) to reduce the amount of data in the feature vectors to a smaller, more representative set of training data. The training module 220 may use supervised or unsupervised machine learning to train the classification model, with the feature vectors of the training dataset serving as the inputs. Different machine learning techniques-such as linear support vector machine (linear SVM), boosting for other algorithms (e.g., AdaBoost), neural networks (e.g., convolutional neural network), logistic regression, naive Bayes, memory-based learning, random forests, bagged trees, decision trees, boosted trees, or boosted stumps-may be used in different embodiments.

In some embodiments, a part of the training dataset may be used to initially train the policy model, and the rest of the training dataset may be held back as a validation subset used by the validation module 230 to validate performance of a trained policy model. The portion of the training dataset not including the validation subset may be used to train the policy model.

The policy model may be a neural network or other types of machine learning model. Taking a policy model being a neural network for example, the training module 220 determines hyperparameters for training the policy model. Hyperparameters are variables specifying the policy model training process. Hyperparameters are different from parameters inside the policy model (e.g., weights of filters). In some embodiments, hyperparameters include variables determining the architecture of the policy model, such as number of hidden layers, etc. Hyperparameters also include variables which determine how the policy model is trained, such as batch size, number of epochs, etc. A batch size defines the number of training samples to work through before updating the parameters of the policy model. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the policy model. An epoch may include one or more batches. The number of epochs may be 10, 100, 500, 1000, or even larger.

The training module 220 may also define the architecture of the policy model, e.g., based on some of the hyperparameters. The architecture of the policy model includes an input layer, an output layer, and a plurality of hidden layers. The input layer of a policy model may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as rectified liner unit (ReLU) layers, pooling layers, fully connected layers, normalization layers, softmax or logistic layers, and so on. The convolutional layers of the policy model abstract the input image to a feature map that is represented by a tensor specifying the feature map height, the feature map width, and the feature map channels (e.g., red, green, blue images include three channels). A pooling layer is used to reduce the spatial volume of input image after convolution. It is used between two convolution layers. A fully connected layer involves weights, biases, and neurons. It connects neurons in one layer to neurons in another layer. It is used to classify images between different category by training.

The training module 220 inputs the training dataset into the policy model and modifies the parameters inside the policy model to minimize the error between the generated labels of objects in the training images and the training labels. The parameters include weights of filters in the convolutional layers of the policy model. In some embodiments, the training module 220 uses a cost function to minimize the error. After the training module 220 finishes the predetermined number of epochs, the training module 220 may stop updating the parameters in the policy model. The policy model having the updated parameters is referred to as a trained policy model.

The validation module 230 verifies accuracy of trained or compressed policy model. In some embodiments, the validation module 230 inputs samples in a validation dataset into the policy model and uses the outputs of the policy model to determine the model accuracy. In some embodiments, a validation dataset may be formed of some or all the samples in the training dataset. Additionally or alternatively, the validation dataset includes additional samples, other than those in the training datasets. In some embodiments, the validation module 230 determines may determine an accuracy score measuring the precision, recall, or a combination of precision and recall of the policy model. The validation module 230 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 230 may compare the accuracy score with a threshold score. In an example where the validation module 230 determines that the accuracy score of the policy model is lower than the threshold score, the validation module 230 instructs the training module 220 to re-train the policy model. In one embodiment, the training module 220 may iteratively re-train the policy model until the occurrence of a stopping condition, such as the accuracy measurement indication that the policy model may be sufficiently accurate, or a number of training rounds having taken place.

The distributer 240 distributes policy models generated by the multi-agent server 120 to the agents 110. In some embodiments, the distributer 240 receives a request for a policy model from an agent 110 through the network 140. The request may include a description of a goal that the agent 110 (or the multi-agent system) needs to accomplish. The request may also include information of the agent 110, such as information describing available computing resource on the agent 110. The information describing available computing resource on the agent 110 can be information indicating network bandwidth, information indicating available memory size, information indicating processing power of the agent 110, information indicating power capacity of the agent 110, and so on. In an embodiment, the distributer 240 may instruct the training module 220 to generate a policy model in accordance with the request. The training module 220 may train a policy model based on the description of the goal.

In another embodiment, the distributer 240 may select the policy model from a group of pre-existing policy models based on the request. The distributer 240 may select a policy model for a particular agent 110 based on the size of the policy model and available resources of the agent 110. In some embodiments, the distributer 240 may receive feedback from the agent 110. For example, the distributer 240 receives first training data from the agent 110 and may send the first training data to the training module 220 for further training the policy model. As another example, the feedback includes an update of the available computer resource on the agent 110. The distributer 240 may send a different policy model to the agent 110 based on the update.

The database 260 stores data received, used, generated, or otherwise associated with the multi-agent server 120. For example, the database 260 stores a training dataset that the training module 220 uses to train policy models and a validation dataset that the validation module 230 used to validate policy models. The training dataset may include data received from the agents 110 or the third-party systems 130. As another example, the database 260 stores hyperparameters and internal parameters of the policy models trained by the multi-agent server 120.

*Example Agent*

FIG. 3 is a block diagram of an agent 110, in accordance with various embodiments. The agent 110 includes a policy model 310, a sensor suite 320, an actuator suite 330, a communication suite 340, and a memory 350. In other embodiments, the multi-agent server 120 may include fewer, more, or different components. Further, functionality attributed to a component of the agent 110 may be accomplished by a different component included in the agent 110 or a different system.

The policy model 310 controls operations and functionality of the agent 110 to maximize reward signals. In some embodiments, the policy model 310 is a computing system, e.g., a neural network, that has been trained using machine learning techniques. The policy model 310 is adapted for I/O communication with other components of the agent 110 (e.g., the sensor suite 320, actuator suite 330, communication suite 340, or memory 350) and external systems (e.g., the multi-agent server 120 or other agents 110). The policy model 310 may be connected to the Internet via a wireless connection (e.g., via a cellular data connection). Additionally or alternatively, the policy model 310 may be coupled to any number of wireless or wired communication systems.

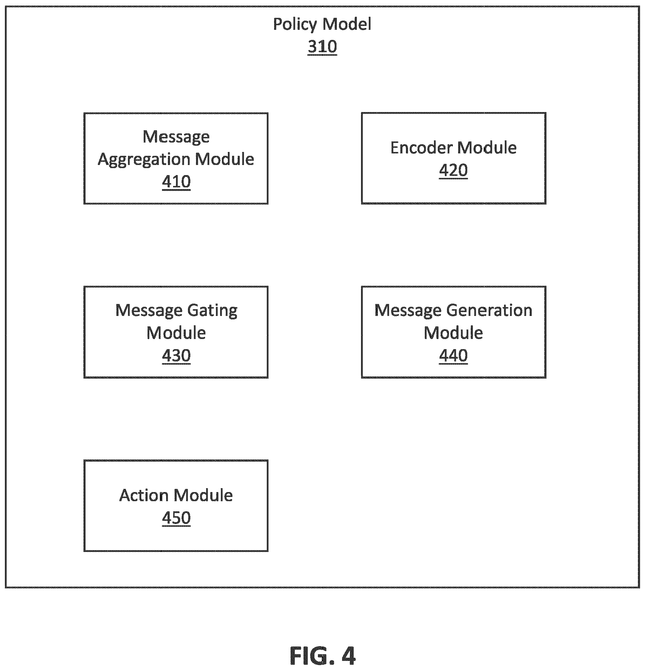

The policy model 310 processes sensor data generated by the sensor suite 320 and/or other data (e.g., data received from the multi-agent server 120) to determine the hidden state of the agent 110. Based upon the hidden state of the agent 110, the policy model 310 modifies or controls behavior of the agent 110. For instance, the policy model 310 controls communications of the agent 110 with other agents 110 in the multi-agent system based on a reward signal that combines task reward (i.e., a value of the communication to carrying out the task) and communication cost (a cost of the communication, e.g., to the agent or to the multi-agent system as a whole). The policy model 310 may determine reward scores based on a hidden state of the agent 110 or a combination of the hidden state of the agent 110 and a hidden state of another agent 110 receiving the communication. The policy model 310 compares a reward score of the agent 110 sending a message to one or more other agents 110 and a reward score of the agent 110 not sending a message to any other agents 110. Based on the comparison, the policy model 310 determines whether to send the message. The policy model can also generate the message and send the message out, e.g., through the communication suite 340. More details regarding the policy model 300 are described below in conjunction with FIGS. 4-6.

The sensor suite 320 detects surrounding environment of the agent 110 and generates sensor data describing the surround environment. The sensor suite 320 may include various types of sensors. In some embodiments, the sensor suite 320 includes a computer vision ("CV") system, localization sensors, and driving sensors. For example, the sensor suite 320 may include photodetectors, cameras, RADAR, Sound Navigation And Ranging (SONAR), LIDAR, global positioning system (GPS), wheel speed sensors, inertial measurement units (IMUs), accelerometers, microphones, strain gauges, pressure monitors, barometers, thermometers, altimeters, ambient light sensors, etc. The sensors may be located in various positions in and around the agent 110. In some embodiments, the sensor suite 320 generates sensor data from the detection of the surrounding environment. The sensor suite 320 may generates sensor data at a predetermined frequency or in response to a request, e.g., a request from the policy model 310. In some embodiments, the sensor suite 320 generates an observation vector from sensor data. The observation vector may be associated with a timestamp indicating a time of the detection.

The actuator suite 330 actuates the agent 110 or components of the agent 110. In some embodiments, the actuator suite includes actuators, e.g., electric motors, stepper motors, jackscrews, electric muscular stimulators in robots, etc. An example actuator may facilitate navigation of the agent 110 in the scene. For instance, an electric motor is used to drive the agent 110 around the scene. Another example actuator may facilitate physical movement of a component, e.g., a sensor. For instance, the actuator can change a pose (position or orientation) of the sensor.

The communication suite 340 includes electronics that facilitate communications of the agent 110. The communication suite 340 can facilitate wire or wireless communications. In some embodiments, the communication suite 340 includes adapters, routers and access points, antennas, repeaters, cables, and so on.

The memory 350 stores data received, generated, used, or otherwise associated with the agent 110. For example, the memory 350 stores internal parameter of the policy model 310, information of hidden states of the agent, messages generated or received by the agent, information of other components of the agent 110 (e.g., calibration information of sensor), and so on. In the embodiment of FIG. 3, the memory 350 is an onboard memory, meaning the memory 350 is located in the agent 110. In other embodiments, the memory 350 may be external to the agent 110. For instance, the memory 350 may be part of the database 250 in FIG. 2.

*Example Policy Model*

FIG. 4 is a block diagram of the policy model 310, in accordance with various embodiments. The policy model 310 controls an agent in a multi-agent system for accomplishing a task shared by the agents in the multi-agent system. For instance, the policy model 310 controls communication of the agent with other agents in the multi-agent system. The policy model 310 may also control other actions of the agent that are needed for accomplishing the task. In FIG. 4, the policy model 310 includes a message aggregating module 410, an encoder module 420, a message gating module 430, a message generation module 440, and an action module 450. In other embodiments, alternative configurations, different or additional components may be included in the policy model 310. Further, functionality attributed to a component of the policy model 310 may be accomplished by a different component included in the policy model 310 or a different system.

The message aggregation module 410 aggregates messages received by the agent. In some embodiments, the message aggregation module 410 generates a communication vector by combining messages received by the agent within a time period, such as a time-step. A time-step is an incremental change in time, such as minute, hour, day, month, etc. In some embodiments, the message aggregation module 410 may generate communication vectors at a predetermined frequency. In other embodiments, the message aggregation module 410 may generate a communication vector after the agent has received a predetermined number of messages since a previous communication vector was generated. In some embodiments, the message aggregation module 410 may use a message forwarding process to generate the communication vector. In a message forwarding process, the message aggregation module 410 forwards a message from a previous time-step to the current time-step. In an embodiment, the message aggregation module 410 generates the communication vector based on one or more messages received by the agent within a previous time-step in addition to the messages received by the agent within the current time-step. The one or more messages have earlier timestamps (e.g., timestamps indicating the previous time-step) than the timestamp of the communication vector (e.g., timestamp indicating the current time-step). In another embodiment of the message forwarding process, the message aggregation module 410 may determine whether the agent receives any messages within the time-step. In response to determining that the agent does not receive any messages within the time-step, the message aggregation module 410 generates the communication vector based on one or more messages received by the agent within a previous time-step. The message forwarding process can address the problem that an agent may fail to retain information from previously received messages.

The encoder module 420 generates state vectors of the agent. A state vector is a vector representing a hidden state of the agent. A state vector may be associated with a timestamp and represents a hidden state of the agent at the time corresponding to the timestamp. The encoder module 420 may generate a state vector based on a communication vector from the message aggregation module 410, an observation vector from the sensor suite 320, and a previous state vector. The previous state vector represents a hidden state of the agent at an earlier time, e.g., a time before the agent received the messages from which the communication vector is generated. The previous state vector may have been generated by the encoder module 420.

In some embodiments, the encoder module 420 is a recurrent neural network, e.g., a long short-term memory (LSTM). The encoder module 420 receives input signals, e.g., a communication vector, an observation vector, and a state vector that has been generated. The state vector may be generated at a time before the communication vector and observation vector were generated. In an embodiment, the encoder module 420 receives its input as a concatenated vector that is generated by applying a combination function on the communication vector, observation vector, and state vector. The encoder module 420 outputs a new state vector. The new state vector represents a hidden state of the agent at a later time, compared with the state vector input into the encoder module 420.

In some embodiments, the encoder module 420 may generate state vectors periodically, e.g., at a predetermined frequency. In other embodiments, the encoder module 420 may generate a state vector in response to a request from another component of the policy model 310. In an embodiment, the encoder module 420 receives a communication vector from the message aggregation module 410, which triggers the encoder module 420 to generate a state vector based on the communication vector. In another embodiment, the message gating module 430 may send a request for state vector to the encoder module 420. In response to the request, the message gating module 430 generates a state vector or retrieves a state vector that has been generated and provides the state vector to the message gating module 430.

The message gating module 430 controls communication from the agent to other agents in the multi-agent system through gates. A gate may be a binary gate having a value of 0 or 1. A gate having a value of 1 allows communication between two agents, versus a gate having a value of zero prevents communication between two agents. In some embodiments, the message gating module 430 receives the current state vector and observation vector of the agent from the encoder module 420 and generates a gate for the agent based on the two vectors. The current state vector may be the latest state vector received by the message gating module 430. The current observation vector may be the latest state vector received by the message gating module 430.

The message gating module 430 may generate gate based on a reward signal represented by a reward score. The reward score may be a weight sum of a task score and a communication score, i.e., a sum of a product of a weight and the task score and a product of another weight and the communication score. The task score indicates a value/contribution of the agent sending the message to the task of the multi-agent system. The communication score indicates a cost of the agent sending the message, such as a cost to the agent itself, a cost to another agent receiving the message, and so on. The cost to an agent may be measured based on consumption of bandwidth, consumption of power, consumption of memory, consumption of time, other types of communication cost, or some combination thereof. In some embodiments, the message gating module 430 determines the task score and communication scored based on the hidden state and observation vectors.

The message gating module 430 optimizes the reward signal to determine whether and to whom to send the message. The message gating module 430 may use various optimization methods, such as Gumbel-Softmax, Straight-Through Gumbel-Softmax, REINFORCE, and so on. In some embodiments, the message gating module 430 may generate another reward score for the agent not sending the message. For instance, the message gating module 430 determines a task score that indicates a value of the agent not sending the message to the task of the multi-agent system, such as improved efficiency of the task, etc. The message gating module 430 determines a communication score that indicates a cost of the agent not sending the message, such as a negative cost indicating saved communication resources, and so on. The message gating module 430 may compare the two reward scores and determine whether to send the message based on the comparison. In an example where the reward score for sending the message is larger than the reward score for not sending the message, the message gating module 430 determines to send the message. In other embodiments, the message gating module 430 optimizes a global reward signal, i.e., the mean of reward signals of all the agents in the multi-agent system.

In some embodiments, the message gating module 430 determines whether to send the message to all the other agents in the multi-agent system by generating gates between the agent and all the other agents. In other embodiments, the message gating module 430 may determine whether to send the message to another agent in particular by generating a gate between the agent and the other agent. In these embodiments, the message gating module 430 may determine the reward scores by using information of the other agent (e.g., state vector and observation vector of the other agent) in addition to the hidden state and observation vectors of the agent itself. The message gating module 430 may generate a gate that allows the agent to send messages to itself.

The message generation module 440 generates messages after the message gating module 430 determines to send the messages. In some embodiments, the message generation module 440 generates a message based on the current state vector of the agent. The message can be sent through the corresponding gate(s). In some embodiments, the message generation module 440 may generate the message before the message gating module 430 determine to send the message or after the message gating module 430 determines not to send the message.

The action module 450 generates actions to be taken by the agent. In some embodiments, the action module 450 receives state vectors from the encoder module 420 and generates one or more actions based on a state vector. The actions may be discrete actions in a discrete action space where each action is expressed by a discrete action vector. The actions may be part of the task of the multi-agent system to accomplish the goal of the multi-agent system.

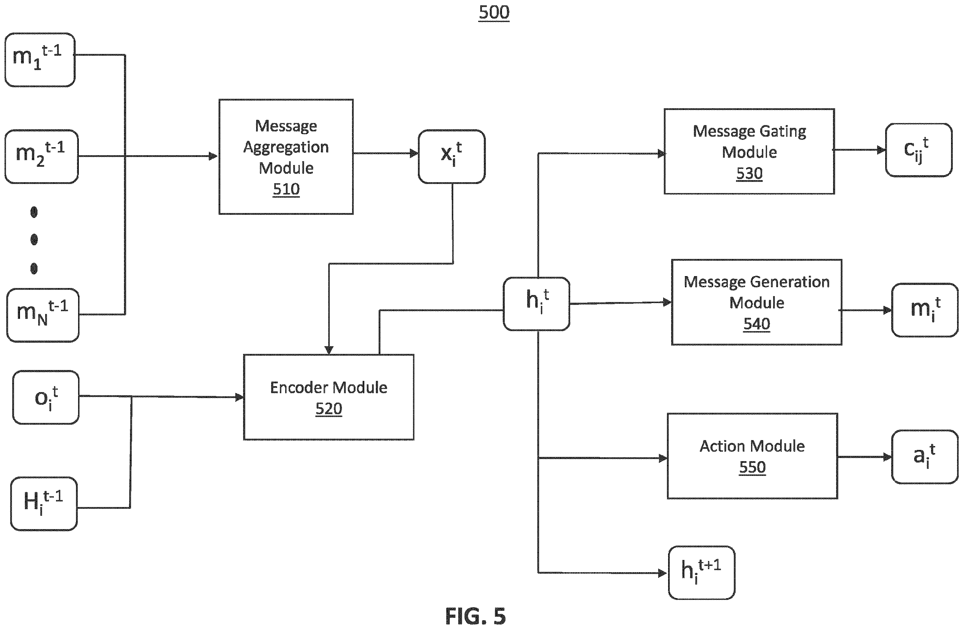

FIG. 5 illustrates a policy network 500 for an i-th agent in a multi-agent system, in accordance with various embodiments. The policy network 500 is an embodiment of the policy model 310 described above in conjunction with FIGS. 3 and 4. In FIG. 5, the multi-agent system includes N agent, where N is an integer larger than one. FIG. 5 illustrates a process of the i-th agent ("agent i," i is an integer smaller than N) at a time-step t. A time earlier than the time-step t is referred to as past time-step t-1.

The policy network 500 for agent i receives three inputs at the time-step t: the local observation $O_i^t$, its past hidden states $h_i^{t-1}$, and incoming messages $m_j^{t-1}$ from all agents, where j is an integer from 1 to N. The message aggregation module 510 combines the incoming messages $m_j^{t-1}$ into a communication vector xf. In some embodiments, the message aggregation module 510 may generate the communication vector $x_i^t$ based on messages received in an earlier time-step, such as t-2, t-3, other earlier time-steps, or some combination thereof. In one example where the agent i did not receive any messages in the time-step t-1, the message aggregation module 510 may forward the earlier messages to the time-step t-1 to generate the communication vector xf. In another example, the message aggregation module 510 may combine the incoming messages $m_j^{t-1}$ and the earlier messages and generate the communication vector $x_i^t$ based on the combination. The encoder module 520 combines the observation $O_i^t$, the communication vector xf, and the previous hidden states $h_i^{t-1}$ and produces new hidden states $h_i^t$. The message gating module 430 receives the current observation $O_i^t$ and the updated hidden states $h_i^t$ and computes a binary gate $C_{i,j}^t \in 0$, 1 controlling the communication from agent i to agent j. In some embodiments, the message gating module 430 may be supplemented with additional inputs, such as hidden states of other agents. The message generation module 540 runs after the encoder module 520 and message gating module 530 and receives the updated hidden state $h_i^t$. The message generation module 540 generates new outgoing messages $m_i^t$. The action module 550 also receives the updated hidden state $h_i^t$ and generates discrete actions $a_i^t$.

*Example Communication Gates*

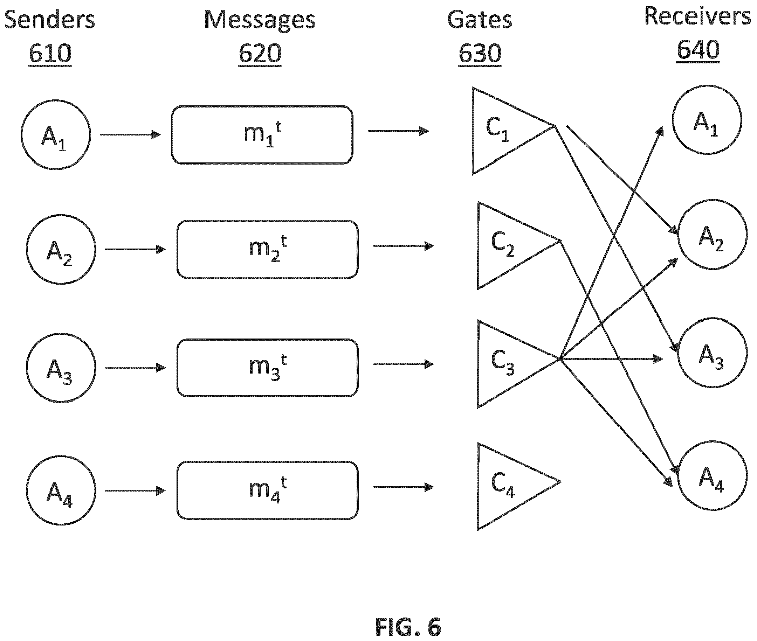

FIG. 6 illustrates gates 630 controlling communications of agents, in accordance with various embodiments. The gates 630 (individually referred to as "gate 630") may be generated by the message gating module 430 in FIG. 4 or the message gating module 530 in FIG. 5. For purpose of illustration, FIG. 6 shows four agents: $A_1$, $A_2$, $A_3$, and $A_4$, that are shown as both senders 610 (individually referred to as "sender 610") and receivers 640 (individually referred to as "sender 640"). A sender 610 sends out messages 620 (individually referred to as "message 620"), and a receiver receives messages. Each gate 630 corresponds to a sender 610 and controls communications of the sender 610 to one or more receivers 640.

As shown in FIG. 6, $A_1$ provides a message $m_1^t$ to its gate $C_1$, which sends the message $m_1^t$ to the $A_2$ and $A_3$. $A_2$ provides a message $m_2^t$ to the gate $C_2$, which sends the message $m_1^t$ to $A_2$ and $A_3$. In this embodiment, $A_2$ sends the message to itself and another

agent $A_3$. $A_3$ provides a message $m_3^t$ to the gate $C_3$,

which sends the message $m_1^t$ to $A_1$, $A_3$, and $A_4$. $A_4$

provides a message $m_4^t$ to the gate $C_4$. However, $C_4$ does not send the message to any agents.

*Example Methods of Controlling Inter-agent Communication*

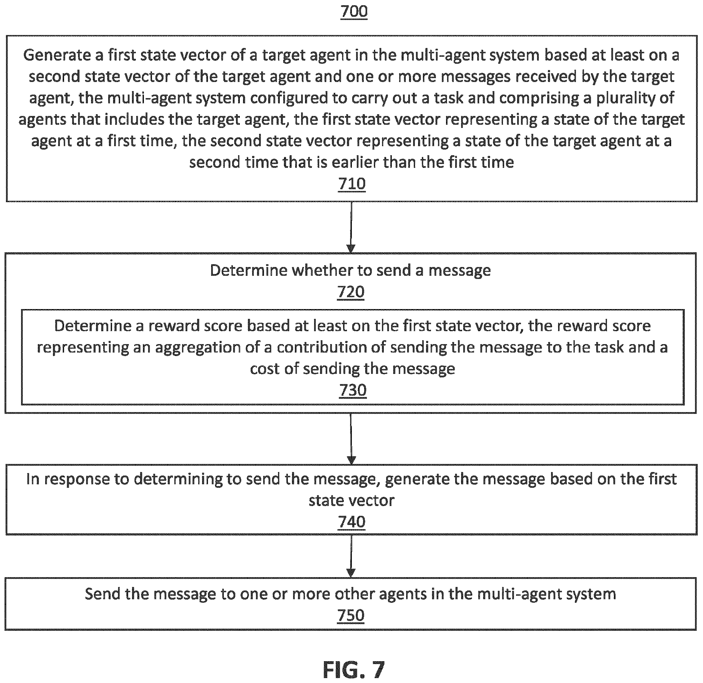

FIG. 7 is a flowchart showing a method 700 of controlling communication of an agent in a multi-agent system, in accordance with various embodiments. The method 700 may be performed by the policy model 310 described above in conjunction with FIG. 3. Although the method 900 is described with reference to the flowchart illustrated in FIG. 7, many other methods of controlling communication of an agent in a multi-agent system may alternatively be used. For example, the order of execution of the steps in FIG. 7 may be changed. As another example, some of the steps may be changed, eliminated, or combined.

The policy model 310 generates 710 a first state vector of the agent in the multi-agent system based at least on a second state vector of the agent and the one or more messages received by the agent. The multi-agent system is configured to carry out a task. The multi-agent system includes a plurality of agents that includes the agent. The first state vector represents a hidden state of the agent at a first time. The second state vector represents a hidden state of the agent at a second time that is earlier than the first time.

The policy model 310 determines 920 whether to send a message. In some embodiments, the policy model 310 determines 920 whether to send a message by determining 930 a reward score based at least on the first state vector. The reward score represents an aggregation of a value of sending the message for carrying out the task and a cost of the agent sending the message. The policy model 310 may determine a task score that indicates the value of sending the message the task and determine a communication score that indicates the cost of sending the message. The reward score may be a weighted sum of the task score and communication score. The policy model 310 may also determine an additional reward score that represents an aggregation of a contribution of not sending the message to the task and a cost of not sending the message. The policy model 310 determines whether to send the message based on the comparison. The policy model 310 may determine the rewards score based on other vectors, such as an observation vector that represents observation of the agent in a scene surround the agent by one or more sensor of the agent.

In response to determining to send the message, the policy model 310 generates 740 the message based on the first state vector. The policy model 310 sends 750 the message to one or more other agents in the multi-agent system. In some embodiments, the policy model 310 also determine an action (e.g., an action other than sending the message) to be taken by the agent for accomplishing the task and instructs an actuator to perform the action. The agent may include an onboard memory that stores data generated by the policy model 310, such as the state vectors, reward score, and so on.

*Example Computing Device*

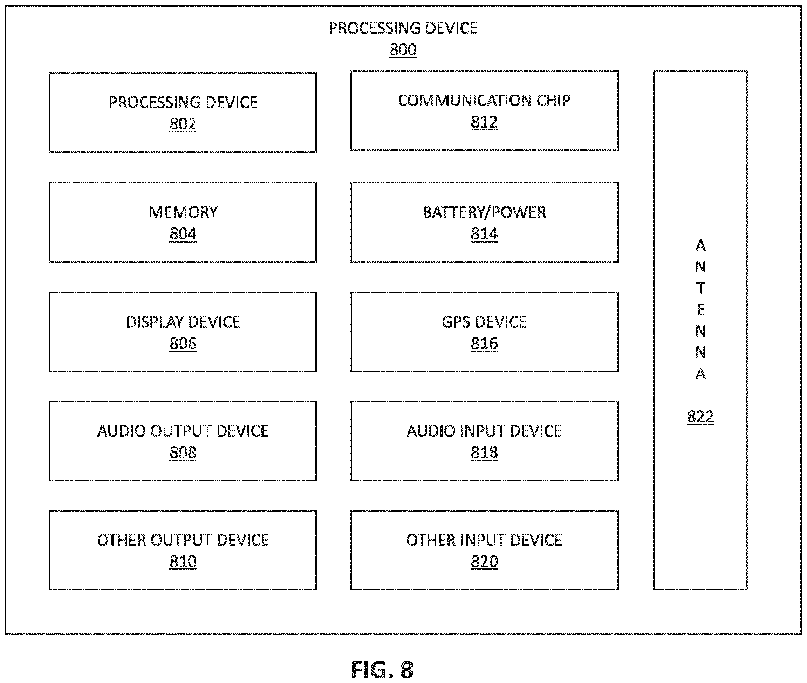

FIG. 8 is a block diagram of an example computing system for use as the multi-agent server 120 in FIG. 1 or the policy model 310 in FIG. 3, in accordance with various embodiments. A number of components are illustrated in FIG. 8 as included in the computing system 800, but any one or more of these components may be omitted or duplicated, as suitable for the application. In some embodiments, some or all of the components included in the computing system 800 may be attached to one or more motherboards. In some embodiments, some or all of these components are fabricated onto a single system on a chip (SoC) die. Additionally, in various embodiments, the computing system 800 may not include one or more of the components illustrated in FIG. 8, but the computing system 800 may include interface circuitry for coupling to the one or more components. For example, the computing system 800 may not include a display device 806, but may include display device interface circuitry (e.g., a connector and driver circuitry) to which a display device 806 may be coupled. In another set of examples, the computing system 800 may not include an audio input device 818 or an audio output device 808, but may include audio input or output device interface circuitry (e.g., connectors and supporting circuitry) to which an audio input device 818 or audio output device 808 may be coupled.

The computing system 800 may include a processing device 802 (e.g., one or more processing devices). As used herein, the term "processing device" or "processor" may refer to any device or portion of a device that processes electronic data from registers and/or memory to transform that electronic data into other electronic data that may be stored in registers and/or memory. The processing device 802 may include one or more digital signal processors (DSPs), application-specific ICs (ASICs), central processing units (CPUs), graphics processing units (GPUs), cryptoprocessors (specialized processors that execute cryptographic algorithms within hardware), server processors, or any other suitable processing devices. The computing system 800 may include a memory 804, which may itself include one or more memory devices such as volatile memory (e.g., DRAM), nonvolatile memory (e.g., read-only memory (ROM)), flash memory, solid hidden state memory, and/or a hard drive. In some embodiments, the memory 804 may include memory that shares a die with the processing device 802. In some embodiments, the memory 804 includes one or more non-transitory computer-readable media storing instructions executable to perform operations for controlling communication of an agent in a multi-agent system, e.g., the method 700 described above in conjunction with FIG. 7 or the operations performed by the multi-agent server 120 described above in conjunction with FIGS. 1 and 2 or the policy model 310 in FIGS. 3 and 4. The instructions stored in the one or more non-transitory computer-readable media may be executed by the processing device 802.

In some embodiments, the computing system 800 may include a communication chip 812 (e.g., one or more communication chips). For example, the communication chip 812 may be configured for managing wireless communications for the transfer of data to and from the computing system 800. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 812 may implement any of a number of wireless standards or protocols, including but not limited to Institute for Electrical and Electronic Engineers (IEEE) standards including Wi-Fi (IEEE 802.8 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication chip 812 may operate in accordance with a Global System for Mobile Communication (GSM), GPRS, Universal Mobile Telecommunications System (UMTS), High Speed Packet Access (HSPA), Evolved HSPA (E-HSPA), or LTE network. The communication chip 812 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 812 may operate in accordance with CDMA, Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 812 may operate in accordance with other wireless protocols in other embodiments. The computing system 800 may include an antenna 822 to facilitate wireless communications and/or to receive other wireless communications (such as AM or FM radio transmissions).

In some embodiments, the communication chip 812 may manage wired communications, such as electrical, optical, or any other suitable communication protocols (e.g., the Ethernet). As noted above, the communication chip 812 may include multiple communication chips. For instance, a first communication chip 812 may be dedicated to shorter-range wireless communications such as Wi-Fi or Bluetooth, and a second communication chip 812 may be dedicated to longer-range wireless communications such as GPS, EDGE, GPRS, CDMA, WiMAX, LTE, EV-DO, or others. In some embodiments, a first communication chip 812 may be dedicated to wireless communications, and a second communication chip 812 may be dedicated to wired communications.

The computing system 800 may include battery/power circuitry 814. The battery/power circuitry 814 may include one or more energy storage devices (e.g., batteries or capacitors) and/or circuitry for coupling components of the computing system 800 to an energy source separate from the computing system 800 (e.g., AC line power).

The computing system 800 may include a display device 806 (or corresponding interface circuitry, as discussed above). The display device 806 may include any visual indicators, such as a heads-up display, a computer monitor, a projector, a touchscreen display, a liquid crystal display (LCD), a light-emitting diode display, or a flat panel display, for example.

The computing system 800 may include an audio output device 808 (or corresponding interface circuitry, as discussed above). The audio output device 808 may include any device that generates an audible indicator, such as speakers, headsets, or earbuds, for example.

The computing system 800 may include an audio input device 818 (or corresponding interface circuitry, as discussed above). The audio input device 818 may include any device that generates a signal representative of a sound, such as microphones, microphone arrays, or digital instruments (e.g., instruments having a musical instrument digital interface (MIDI) output).

The computing system 800 may include a GPS device 816 (or corresponding interface circuitry, as discussed above). The GPS device 816 may be in communication with a satellite-based system and may receive a location of the computing system 800, as known in the art.

The computing system 800 may include an other output device 810 (or corresponding interface circuitry, as discussed above). Examples of the other output device 810 may include an audio codec, a video codec, a printer, a wired or wireless transmitter for providing information to other devices, or an additional storage device.

The computing system 800 may include an other input device 820 (or corresponding interface circuitry, as discussed above). Examples of the other input device 820 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing system 800 may have any desired form factor, such as a handheld or mobile computing system (e.g., a cell phone, a smart phone, a mobile internet device, a music player, a tablet computer, a laptop computer, a netbook computer, an ultrabook computer, a PDA, an ultramobile personal computer, etc.), a desktop computing system, a server or other networked computing component, a printer, a scanner, a monitor, a set-top box, an entertainment control unit, a vehicle control unit, a digital camera, a digital video recorder, or a wearable computing system. In some embodiments, the computing system 800 may be any other electronic device that processes data.

*Select Examples*

The following paragraphs provide various examples of the embodiments disclosed herein.

Example 1 provides a computer-implemented method for controlling communication of an agent in a multi-agent system, the method including generating a first state vector of the agent in the multi-agent system based at least on a second state vector of the agent and one or more messages received by the agent, the multi-agent system configured to carry out a task and comprising a plurality of agents that includes the agent, the first state vector representing a hidden state of the agent at a first time, the second state vector representing a hidden state of the agent at a second time that is earlier than the first time; determining whether to send a message, where determining whether to send the message includes determining a reward score based at least on the first state vector, the reward score representing an aggregation of a value of sending the message for carrying out the task and a cost of the agent sending the message; in response to determining to send the message, generating the message based on the first state vector; and sending, by the agent, the message to one or more other agents in the multi-agent system.

Example 2 provides the method of example 1, where determining the reward score includes determining a task score indicating the value of sending the message for carrying out the task; determining a communication score indicating the cost of sending the message; and determining the reward score based on an aggregation of the task score and the communication score.

Example 3 provides the method of example 2, where determining the reward score based on an aggregation of the task score and the communication score includes determining a weighted sum of the task score and the communication score.

Example 4 provides the method of example 1, where determining whether to send the message further includes determining an additional reward score, the additional reward score representing an aggregation of a contribution of not sending the message to the task and a cost of the agent not sending the message; comparing the reward score with the additional reward score; and determining whether to send the message based on the comparison.

Example 5 provides the method of example 1, where the one or more other agents include a recipient agent, and determining the reward score based at least on the first state vector includes determining the reward score based on the first state vector of the agent and a state vector of the recipient agent, the state vector of the recipient agent being a vector representing a hidden state of the recipient agent at the first time.

Example 6 provides the method of example 5, where determining the reward score based at least on the first state vector further includes sending, from the agent to the recipient agent, a request for the state vector of the recipient agent; and receiving, by the agent from the recipient agent, the state vector of the recipient agent.

Example 7 provides the method of example 1, where producing the first state vector of the agent based at least on the second state vector of the agent and the one or more messages received by the agent includes generating a communication vector based on the one or more messages received by the agent; and producing the first state vector of the agent based at least on the second state vector and the communication vector.

Example 8 provides the method of example 7, where producing the first state vector of the agent based at least on the second state vector and the communication vector includes generating an observation vector based on sensor data generated by a sensor in the agent, the sensor configured to perceive a scene surrounding the agent; and producing the first state vector of the agent based on the second state vector, the communication vector, and the observation vector.

Example 9 provides the method of example 1, further including determining an action to be taken by the agent for accomplishing the task based on the first state vector of the agent; and instructing an actuator in the agent to perform the action.

Example 10 provides the method of example 1, where the first or second state vector of the agent is stored in a memory in the agent.

Example 11. One or more non-transitory computer-readable media storing instructions executable to perform operations for controlling communication of an agent in a multi-agent system, the operations including generating a first state vector of the agent in the multi-agent system based at least on a second state vector of the agent and one or more messages received by the agent, the multi-agent system configured to carry out a task and comprising a plurality of agents that includes the agent, the first state vector representing a hidden state of the agent at a first time, the second state vector representing a hidden state of the agent at a second time that is earlier than the first time; determining whether to send a message, where determining whether to send the message includes determining a reward score based at least on the first state vector, the reward score representing an aggregation of a value of sending the message for carrying out the task and a cost of the agent sending the message; in response to determining to send the message, generating the message based on the first state vector; and sending, by the agent, the message to one or more other agents in the multi-agent system.

Example 12 provides the one or more non-transitory computer-readable media of example 11, where determining the reward score includes determining a task score indicating the value of sending the message for carrying out the task; determining a communication score indicating the cost of sending the message; and determining the reward score based on an aggregation of the task score and the communication score.

Example 13 provides the one or more non-transitory computer-readable media of example 12, where determining the reward score based on an aggregation of the task score and the communication score includes determining a weighted sum of the task score and the communication score.

Example 14 provides the one or more non-transitory computer-readable media of example 11, where determining whether to send the message further includes determining an additional reward score, the additional reward score representing an aggregation of a contribution of not sending the message to the task and a cost of the agent not sending the message; comparing the reward score with the additional reward score; and determining whether to send the message based on the comparison.

Example 15 provides the one or more non-transitory computer-readable media of example 11, where the one or more other agents include a recipient agent, and determining the reward score based at least on the first state vector includes determining the reward score based on the first state vector of the agent and a state vector of the recipient agent, the state vector of the recipient agent being a vector representing a hidden state of the recipient agent at the first time.

Example 16 provides the one or more non-transitory computer-readable media of example 15, where determining the reward score based at least on the first state vector further includes sending, from the agent to the recipient agent, a request for the state vector of the recipient agent; and receiving, by the agent from the recipient agent, the state vector of the recipient agent.

Example 17 provides the one or more non-transitory computer-readable media of example 11, where producing the first state vector of the agent based at least on the second state vector of the agent and the one or more messages received by the agent includes generating a communication vector based on the one or more messages received by the agent; and producing the first state vector of the agent based at least on the second state vector and the communication vector.

Example 18 provides the one or more non-transitory computer-readable media of example 17, where producing the first state vector of the agent based at least on the second state vector and the communication vector includes generating an observation vector based on sensor data generated by a sensor in the agent, the sensor configured to perceive a scene surrounding the agent; and producing the first state vector of the agent based on the second state vector, the communication vector, and the observation vector.

Example 19 provides the one or more non-transitory computer-readable media of example 11, further including determining an action to be taken by the agent for accomplishing the task based on the first state vector of the agent; and instructing an actuator in the agent to perform the action.

Example 20 provides the one or more non-transitory computer-readable media of example 11, where the first or second state vector of the agent is stored in a memory in the agent.

Example 21 provides an apparatus for controlling communication of an agent in a multi-agent system, the apparatus including a computer processor for executing computer program instructions; and a non-transitory computer-readable memory storing computer program instructions executable by the computer processor to perform operations including generating a first state vector of the agent in the multi-agent system based at least on a second state vector of the agent and one or more messages received by the agent, the multi-agent system configured to carry out a task and comprising a plurality of agents that includes the agent, the first state vector representing a hidden state of the agent at a first time, the second state vector representing a hidden state of the agent at a second time that is earlier than the first time, determining whether to send a message, where determining whether to send the message includes determining a reward score based at least on the first state vector, the reward score representing an aggregation of a value of sending the message for carrying out the task and a cost of the agent sending the message, in response to determining to send the message, generating the message based on the first state vector, and sending, by the agent, the message to one or more other agents in the multi-agent system.

Example 22 provides the apparatus of example 21, where determining the reward score includes determining a task score indicating the value of sending the message for carrying out the task; determining a communication score indicating the cost of sending the message; and determining the reward score based on an aggregation of the task score and the communication score.

Example 23 provides the apparatus of example 21, where determining whether to send the message further includes determining an additional reward score, the additional reward score representing an aggregation of a contribution of not sending the message to the task and a cost of the agent not sending the message; comparing the reward score with the additional reward score; and determining whether to send the message based on the comparison.

Example 24 provides the apparatus of example 21, where the one or more other agents include a recipient agent, and determining the reward score based at least on the first state vector includes determining the reward score based on the first state vector of the agent and a state vector of the recipient agent, the state vector of the recipient agent being a vector representing a hidden state of the recipient agent at the first time.

Example 25 provides the apparatus of example 21, where producing the first state vector of the agent based at least on the second state vector of the agent and the one or more messages received by the agent includes producing the first state vector of the agent based the second state vector, a communication vector, and an observation vector, the communication vector representing the one or more messages, the observation vector representing detection of a scene surrounding by the agent by one or more sensors of the agent.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

**Claims**

1. A computer-implemented method for controlling communication of an agent in a multi-agent system, the method comprising:

   generating a first state vector of the agent in the multi-agent system based at least on a second state vector of the agent and one or more messages received by the agent, the multi-agent system configured to carry out a task and comprising a plurality of agents that includes the agent, the first state vector representing a hidden state of the agent at a first time, the second state vector representing a hidden state of the agent at a second time that is earlier than the first time;
   determining whether to send a message, wherein determining whether to send the message comprises determining a reward score based at least on the first state vector, the reward score representing an aggregation of a value of sending the message for carrying out the task and a cost of the agent sending the message;
   in response to determining to send the message, generating the message based on the first state vector; and
   sending the message to one or more other agents in the multi-agent system.

2. The method of claim 1, wherein determining the reward score comprises:

   determining a task score indicating the value of sending the message for carrying out the task;
   determining a communication score indicating the cost of sending the message; and
   determining the reward score based on an aggregation of the task score and the communication score.

3. The method of claim 2, wherein determining the reward score based on an aggregation of the task score and the communication score comprises: determining a weighted sum of the task score and the communication score.

4. The method of any of the preceding claims, wherein determining whether to send the message further comprises:

   determining an additional reward score, the additional reward score representing an aggregation of a contribution of not sending the message to the task and a cost of the agent not sending the message;
   comparing the reward score with the additional reward score; and
   determining whether to send the message based on the comparison.

5. The method of any of the preceding claims, wherein the one or more other agents comprise a recipient agent, and determining the reward score based at least on the first state vector comprises: determining the reward score based on the first state vector of the agent and a state vector of the recipient agent, the state vector of the recipient agent being a vector representing a hidden state of the recipient agent at the first time.

6. The method of claim 5, wherein determining the reward score based at least on the first state vector further comprises:

   sending, from the agent to the recipient agent, a request for the state vector of the recipient agent; and
   receiving, by the agent from the recipient agent, the state vector of the recipient agent.

7. The method of any of the preceding claims, wherein producing the first state vector of the agent based at least on the second state vector of the agent and the one or more messages received by the agent comprises:

   generating a communication vector based on the one or more messages received by the agent; and
   producing the first state vector of the agent based at least on the second state vector and the communication vector.

8. The method of claim 7, wherein producing the first state vector of the agent based at least on the second state vector and the communication vector comprises:

   generating an observation vector based on sensor data generated by a sensor in the agent, the sensor configured to perceive a scene surrounding the agent; and
   producing the first state vector of the agent based on the second state vector, the communication vector, and the observation vector.

9. The method of any of the preceding claims, further comprising:

   determining an action to be taken by the agent for accomplishing the task based on the first state vector of the agent; and
   instructing an actuator in the agent to perform the action.

10. The method of any of the preceding claims, wherein the first or second state vector of the agent is stored in a memory in the agent.

11. One or more non-transitory computer-readable media storing instructions executable to perform the method of any of the preceding claims.

12. An apparatus for controlling communication of an agent in a multi-agent system, the apparatus comprising:

    a computer processor for executing computer program instructions; and
    a non-transitory computer-readable memory storing computer program instructions executable by the computer processor to perform operations comprising:

       generating a first state vector of the agent in the multi-agent system based at least on a second state vector of the agent and one or more messages received by the agent, the multi-agent system configured to carry out a task and comprising a plurality of agents that includes the agent, the first state vector representing a hidden state of the agent at a first time, the second state vector representing a hidden state of the agent at a second time that is earlier than the first time,
determining whether to send a message, wherein determining whether to send the message comprises determining a reward score based at least on the first state vector, the reward score representing an aggregation of a value of sending the message for carrying out the task and a cost of the agent sending the message,
in response to determining to send the message, generating the message based on the first state vector, and
sending, by the agent, the message to one or more other agents in the multi-agent system.

13. The apparatus of claim 12, wherein determining the reward score comprises:

    determining a task score indicating the value of sending the message for carrying out the task;
    determining a communication score indicating the cost of sending the message; and
    determining the reward score based on an aggregation of the task score and the communication score.

14. The apparatus of claim 12 or 13, wherein determining whether to send the message further comprises:

    determining an additional reward score, the additional reward score representing an aggregation of a contribution of not sending the message to the task and a cost of the agent not sending the message;
    comparing the reward score with the additional reward score; and
    determining whether to send the message based on the comparison.

15. The apparatus of any one of claims 12-14, wherein the one or more other agents comprise a recipient agent, and determining the reward score based at least on the first state vector comprises:
determining the reward score based on the first state vector of the agent and a state vector of the recipient agent, the state vector of the recipient agent being a vector representing a hidden state of the recipient agent at the first time.

# Multi-agent Reinforcement Learning Environment
## 100

Multi-agent Server
120

Third-party System
130

Network
140

Third-party System
130

Agent
110

Agent
110

Agent
110

**FIG. 1**

EP 4 195 121 A1

Multi-Agent Server
110

Interface
Module
210

Training
Module
220

Validation
Module
230

Distributer
240

Database
250

**FIG. 2**

Agent
110

Policy Model
310

Sensor Suite
320

Actuator Suite
330

Communication
Suite
340

Memory
350

**FIG. 3**

Policy Model
310

Message
Aggregation Module
410

Encoder Module
420

Message Gating
Module
430

Message Generation
Module
440

Action Module
450

**FIG. 4**

FIG. 5

EP 4 195 121 A1

| Senders | Messages | Gates | Receivers |
|---------|----------|-------|-----------|
| 610 | 620 | 630 | 640 |

$A_1 \rightarrow m_1^t \rightarrow C_1$

$A_2 \rightarrow m_2^t \rightarrow C_2$

$A_3 \rightarrow m_3^t \rightarrow C_3$

$A_4 \rightarrow m_4^t \rightarrow C_4$

Receivers: $A_1$, $A_2$, $A_3$, $A_4$

**FIG. 6**

EP 4 195 121 A1

Generate a first state vector of a target agent in the multi-agent system based at least on a second state vector of the target agent and one or more messages received by the target agent, the multi-agent system configured to carry out a task and comprising a plurality of agents that includes the target agent, the first state vector representing a state of the target agent at a first time, the second state vector representing a state of the target agent at a second time that is earlier than the first time
710

Determine whether to send a message
720

Determine a reward score based at least on the first state vector, the reward score representing an aggregation of a contribution of sending the message to the task and a cost of sending the message
730

In response to determining to send the message, generate the message based on the first state vector
740

Send the message to one or more other agents in the multi-agent system
750

**FIG. 7**

EP 4 195 121 A1

PROCESSING DEVICE
800

| PROCESSING DEVICE 802 | COMMUNICATION CHIP 812 |
|---|---|
| MEMORY 804 | BATTERY/POWER 814 |
| DISPLAY DEVICE 806 | GPS DEVICE 816 |
| AUDIO OUTPUT DEVICE 808 | AUDIO INPUT DEVICE 818 |
| OTHER OUTPUT DEVICE 810 | OTHER INPUT DEVICE 820 |

ANTENNA

822

FIG. 8

| | Europäisches Patentamt European Patent Office Office européen des brevets | **EUROPEAN SEARCH REPORT** | Application Number EP 22 20 4924 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VARUN KUMAR VIJAY ET AL: "Minimizing Communication while Maximizing Performance in Multi-Agent Reinforcement Learning", ARXIV.ORG, CORNELL UNIVERSITY LIBRARY, 201 OLIN LIBRARY CORNELL UNIVERSITY ITHACA, NY 14853, 15 June 2021 (2021-06-15), XP081990399, * Abstract Introduction ECNet: Efficient Communication Network Conclusion * ----- | 1-15 | INV. G06Q10/063 G06F18/214 G06N3/006 |
| X | WO 2021/156441 A1 (DEEPMIND TECH LTD [GB]) 12 August 2021 (2021-08-12) * paragraph [0031] – paragraph [0055] * ----- | 1-15 | |

TECHNICAL FIELDS SEARCHED (IPC)

G06Q

The present search report has been drawn up for all claims

| Place of search | Date of completion of the search | Examiner |
|---|---|---|
| Munich | 29 March 2023 | Aguilar, José María |

EPO FORM 1503 03.82 (P04C01)

## ANNEX TO THE EUROPEAN SEARCH REPORT
## ON EUROPEAN PATENT APPLICATION NO.

EP 22 20 4924

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2023

| Patent document cited in search report | Publication date | Patent family member(s) | | Publication date |
|---|---|---|---|---|
| WO 2021156441 A1 | 12-08-2021 | EP | 4094196 A1 | 30-11-2022 |
| | | US | 2023076192 A1 | 09-03-2023 |
| | | WO | 2021156441 A1 | 12-08-2021 |

EPO FORM P0459

For more details about this annex : see Official Journal of the European Patent Office, No. 12/82